(19) Europäisches Patentamt
European Patent Office
Office européen des brevets

(11) Numéro de publication: **0 666 561 A1**

# (12) DEMANDE DE BREVET EUROPEEN

(21) Numéro de dépôt: **95200202.0**

(22) Date de dépôt: **27.01.95**

(51) Int. Cl.[6]: **G11B 7/00**, G11B 7/24, C07F 15/02

(30) Priorité: **03.02.94 FR 9401224**

(43) Date de publication de la demande: **09.08.95 Bulletin 95/32**

(84) Etats contractants désignés: **DE FR GB**

(71) Demandeur: **LABORATOIRES D'ELECTRONIOUE PHILIPS**
**22, Avenue Descartes**
**F-94450 Limeil-Brévannes (FR)**
(84) **FR**

(71) Demandeur: **PHILIPS ELECTRONICS N.V.**
**Groenewoudseweg 1**
**NL-5621 BA Eindhoven (NL)**
(84) **DE GB**

(72) Inventeur: **Kahn, Olivier**
**Société Civile S.P.I.D.,**
**156, Boulevard Haussmann**
**F-75008 Paris (FR)**
Inventeur: **Jay, Charlotte**
**Société Civile S.P.I.D.,**
**156, Boulevard Haussmann**
**F-75008 Paris (FR)**
Inventeur: **Krober, Jonas**
**Société Civile S.P.I.D.,**
**156, Boulevard Haussmann**
**F-75008 Paris (FR)**
Inventeur: **Claude, Renée**
**Société Civile S.P.I.D.,**
**156, Boulevard Haussmann**
**F-75008 Paris (FR)**
Inventeur: **Groliere, Françoise**
**Société Civile S.P.I.D.,**
**156, Boulevard Haussmann**
**F-75008 Paris (FR)**

(74) Mandataire: **Lottin, Claudine et al**
**Société Civile S.P.I.D.**
**156, Boulevard Haussmann**
**F-75008 Paris (FR)**

## (54) Composés chimiques de départ à transition de spin et dispositifs munis de moyens d'inscription, mémorisation et effaçage comprenant un milieu actif incluant au moins un de ces composés.

(57) Composé chimique de départ à transition de spin, sous forme de poudre, incluant un réseau avec une molécule formée d'un complexe où le fer ($Fe_{II}$) est associé à un ligand 1-2-4 triazole (H-Trz), et à un anion $(A)_2$ choisi parmi $BF_4^-$, $ClO_4^-$, $Br^-$, $CO_3^{2-}$, et cette molécule ayant pour formule selon l'anion :

a) $Fe_{II}(H\text{-}Trz)_3\ (BF_4^-)_2$, b) $Fe_{II}(H\text{-}Trz)_3\ (ClO_4^-)_2$,

c) $Fe_{II}(H\text{-}Trz)_3\ (Br^-)_2$, d) $Fe_{II}(H\text{-}Trz)_3\ (Cl^-)_2$, e) $Fe_{II}(H\text{-}Trz)_3\ (CO_3^{2-})$

Ce composé présente deux phases cristallines ayant chacune des transitions de spin associées à des changements entre deux couleurs blanc et pourpre, dont des températures critiques sont l'une inférieure et l'autre supérieure à la température ambiante.

Des dispositifs comprenant un milieu actif incluant un ou plusieurs de ces composés sont inscriptibles, effaçables et peuvent présenter un effet mémoire induit thermiquement.

Application : Dispositifs de stockage et/ou affichage de données.

EP 0 666 561 A1

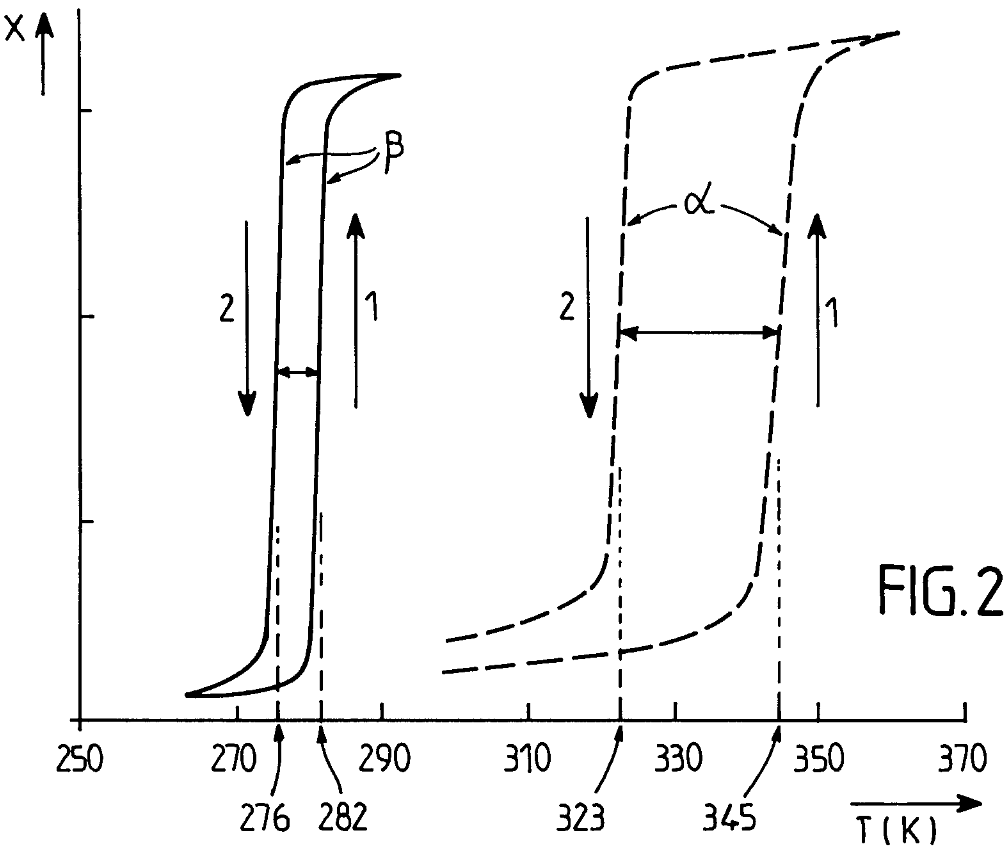


FIG. 2

L'invention concerne des composés chimiques de départ à transition de spin, et des procédés de réalisation de ces composés de départ.

L'invention concerne également des dispositifs munis de moyens d'inscription, mémorisation, effaçage comprenant un milieu actif incluant au moins un de ces composés de départ. L'invention concerne aussi des procédés pour mettre en oeuvre ces dispositifs.

L'invention trouve son application dans le domaine des dispositifs de stockage, de traitement d'information et/ou d'affichage de données.

Il est déjà connu de la demande de brevet EP N° 0 543 465 une famille de composés apte à former des matériaux inscriptibles et effaçables thermiquement dont le domaine d'action est situé dans la zone des températures ambiantes.

Cette famille est formée d'un réseau comprenant des molécules incluant :

A) un métal qui peut être le fer $Fe_{II}$ ou $Fe_{III}$, ou le cobalt $Co_{II}$,

B) des ligands associés à ce métal, tels que :

* un 1-2-4 triazole substitué de formule abrégée R-Trz où R est un alkyl $C_n H_{2n+1}$

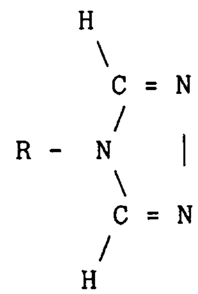

(formule développée de R-Trz)

* un 1-2-4 triazolate de formule abrégée $Trz^-$

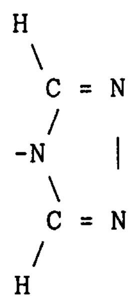

(formule développée de $Trz^-$)

C) un anion choisi parmi $BF_4^-$, $ClO_4^-$, $CO_3^{2-}$, $Br^-$, $Cl^-$

D) en outre **obligatoirement** au moins une molécule d'eau $H_2O$ non liée de façon covalente avec le complexe du métal, mais qui est présente dans le réseau grâce à un agent hygroscopique choisi parmi les précurseurs du noyau de métal,

E) et un agent dopant qui est un aminotriazole de formule abrégée R'-Trz où R' est une amine N-$C_nH_{2n+1}$

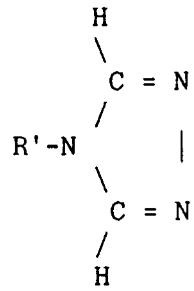

(formule développée de R'-Trz)

La formule générale des molécules de la famille décrite dans ce document cité s'écrit de la façon suivante :

$M_{II}$ $[(R\text{-}Trz)_2(Trz^-)]_{1-x}$ $(R'\text{-}Trz)_x$ A, n $H_2O$

Dans cette formule : M est le métal, A est l'anion,

Trz, R-Trz, R'-Trz } sont des ligands de types triazolate et triazole

substitué, en proportion respective réglée par la valeur x de la concentration,
et n est le nombre de molécules d'eau $H_2O$ non liée de façon covalente à la molécule de complexe du métal.

Dans cette formule, en outre, cette valeur x de concentration est petite, de manière à ce que le ligand de formule R'-Trz se trouve en faible proportion et constitue en fait un agent de dopage qui agit sur les propriétés intrinsèques du matériau.

Parmi les molécules citées à titre d'exemple sélectionnées dans cette famille générale, on trouve :

$Fe_{II}[(HTrz)_2(Trz^-)]_{0,9}$ $(NH_2\text{-}Trz)_{0,1}(BF_4^-)$, $6H_2O$

où

Trz est le 1-2-4 triazolate<br>
H-Trz est le 1-2-4 triazole } comme ligands

$NH_2$-Trz est l'aminotriazole comme dopant.

Un procédé de préparation des composés de cette famille générale consiste à mettre en présence un sel du métal (par exemple $Fe(ClO_4^-)_2$) avec les ligands, dans une solution acide, ce qui produit un précipité. Ensuite le précipité est séparé de la solution. Ce précipité est recueilli sous forme de poudre. En utilisant le sel du métal en excès, une certaine quantité d'eau est capturée.

Les composés de la famille générale décrite dans le document EP 0543 465 cité présentent une transition d'états de spin, entre un état dit bas spin (LS) et un état dit haut spin (HS) qui est induite exclusivement thermiquement, et qui est accompagnée de modifications électroniques et structurelles des molécules. Ces modifications provoquent un changement abrupt du spectre d'absorption des molécules et donc de la couleur des composés, les niveaux électroniques étant devenus différents.

Ainsi dans l'état bas spin (LS de l'anglais : Low-Spin) les composés sont pourpre foncé, alors que dans l'état haut spin (HS de l'anglais : High-Spin) ces composés sont d'un blanc de craie. De plus, chacun des états haut spin (HS) et bas spin (LS) est un état parfaitement stable si l'on place les composés à une température moyenne, dite température critique moyenne, située entre les températures auxquelles ils basculent dans l'état haut spin ou bas spin.

L'étude de ces matériaux a montré qu'ils présentaient, lors de la transition d'états de spin, un effet retard, dû à la coopérativité intermoléculaire, d'où il résultait un phénomène d'hystérésis qui selon le matériau choisi pouvait aller de quelques degrés Celsius à quelques dizaines de degrés Celsius, entre - 20 et 100 ° C, c'est-à-dire dans un domaine de température approprié aux applications industrielles.

Du fait de la coopérativité, lors de l'application d'une perturbation thermique, il se produit que :

- ou bien toutes les molécules transitent en même temps au sein d'un agrégat,
- ou bien aucune ne transite.

Aussi, les composés de la famille générale connus du document EP 0 543 465 peuvent agir comme des matériaux à mémoire, INSCRIPTIBLES et EFFACABLES THERMIQUEMENT, LISIBLES OPTIQUEMENT, et donc être utilisés aussi bien pour le stockage d'informations, pour le traitement d'informations ou pour l'affichage d'informations.

L'état de la technique cité EP 0 543 465 révèle que le domaine de température dans lequel ces composés opèrent, dépend essentiellement de la nature du ligand choisi comme agent de dopage.

La transition de spin des composés connus suppose l'existence de deux puits de potentiel, l'un correspondant à l'état bas spin LS, l'autre correspondant à l'état haut spin HS. Ces puits de potentiel sont séparés par une barrière de potentiel. Le bas de chacun des puits de potentiel correspond respectivement à un premier et à un second niveaux d'énergie, le niveau d'énergie du bas du puits haut spin étant plus élevé que le niveau d'énergie du bas du puits bas spin.

Par application d'une perturbation thermique à l'un des composés de la famille, d'abord placé dans l'état stable bas spin (LS), où les électrons sont piégés dans le premier puits de potentiel, des états haut spin excités non-stables sont induits, puis les électrons retombent via des transitions permises en suivant une voie de relaxation principale qui est celle du second puits de potentiel correspondant à un état haut spin parfaitement stable dans une gamme de température donnée. Les électrons restent piégés dans le second puits de potentiel correspondant à l'état haut spin HS et ne retournent pas spontanément dans le premier puits de potentiel correspondant à l'état bas spin LS du fait du phénomène d'hystérésis. Pour retrouver cet état bas spin LS, il est nécessaire de refroidir le composé en-deça du domaine d'hystérésis.

Cependant, les composés de la famille connus du document cité montrent jusqu'à maintenant, dans le domaine des températures ambiantes où ils doivent être utilisés comme matériaux d'enregistrement ou stockage d'information, une amplitude d'hystérésis trop faible.

Par exemple, le composé exemplifié N ° 5 du document EP 0543 465 cité

$Fe_{II}[(HTrz)_2(Trz^-)]_{0,9}\ (NH_2\text{-}Trz)_{0,1}(BF_4^-),\ 6H_2O$

a une température critique située entre 20 et 25 ° C et une amplitude d'hystérésis de seulement 10 à 20 ° .

La présente invention a pour objet-de proposer des composés sélectionnés parmi ceux :

- qui présentent des transitions de spin induites thermiquement, donc qui sont THERMIQUEMENT INSCRIPTIBLES et EFFACABLES,
- qui sont lisibles OPTIQUEMENT,
- qui présentent des états de SPIN stables,
- qui présentent une température critique située dans la gamme des températures ambiantes,
- qui ont une hystérésis de plus grande amplitude que celle des composés proposés par le document cité EP 0543 465, de manière à ce que l'écriture et l'effacement puissent être mieux contrôlés, et que, en particulier, les températures auxquelles l'écriture ou l'effacement sont produits répondent aux normes imposées par les fabriquants de dispositifs d'affichage, normes qui sont :

$$T \leqq 5\,°C \text{ pour l'effacement}$$
$$T > 50\,°C \text{ pour l'écriture.}$$

Ces buts sont atteints au moyen d'un composé chimique de départ à transition de spin, sous forme de poudre, incluant un réseau avec une molécule formée d'un complexe où le fer ($Fe_{II}$) est associé à un ligand 1-2-4 triazole (H-Trz), cette molécule comprenant en outre un anion $(A)_2$ choisi parmi $BF_4^-$, $ClO_4^-$, $Br^-$, $CO_3^{2-}$, cette molécule ayant pour formule selon l'anion :

a) $Fe_{II}(H\text{-}Trz)_3\ (BF_4^-)_2$

b) $Fe_{II}(H\text{-}Trz)_3\ (ClO_4^-)_2$

c) $Fe_{II}(H\text{-}Trz)_3\ (Br^-)_2$

d) $Fe_{II}(H\text{-}Trz)_3\ (Cl^-)_2$

e) $Fe_{II}(H\text{-}Trz)_3\ (CO_3^{2-})$

Dans une variante selon l'invention est proposée un composé chimique de départ à transition de spin, sous forme de poudre, incluant un réseau avec une molécule formée d'un complexe où le fer ($Fe_{II}$) est associé à un ligand 1-2-4 triazole (HTrz), cette molécule comprenant en outre un anion $(A)_2$ choisi parmi $BF_4^-$, $ClO_4^-$, $Br^-$, $CO_3^{2-}$, cette molécule ayant pour formule selon l' anion :

a') $Fe_{II}(H\text{-}Trz)_3\ (BF_4^-)_2,\ H_2O$

b') $Fe_{II}(H\text{-}Trz)_3\ (ClO_4^-)_2,\ H_2O$

c') $Fe_{II}(H\text{-}Trz)_3\ (Br^-)_2,\ H_2O$

d') $Fe_{II}(H\text{-}Trz)_3\ (Cl^-)_2,\ H_2O$

e') $Fe_{II}(H\text{-}Trz)_3\ (CO_3^{2-}),\ H_2O$

où une molécule d'eau par molécule du complexe de fer est présente dans le réseau, uniquement liée par liaison hydrogène au ligand 1-2-4- triazole (H-Trz).

Ce composé de départ montre un effet étonnant qui n'était pas connu de la famille générale décrite dans la demande de brevet européen EP 0 543 465. Cet effet étonnant consiste dans le fait que le composé de départ selon l'invention présente deux phases cristallines ($\alpha$, $\beta$), dont au moins l'une, notée seconde phase ($\beta$), est inductible thermiquement à partir de l'autre notée première phase ($\alpha$) à une température supérieure ou égale à une première température de référence (To). Cet effet étonnant n'était pas connu du document EP 0 543 465, et n'a pas été trouvé selon l'invention pour des composés de la famille générale, en dehors de ceux qui sont sélectionnés ici pour former le présent composé de départ.

Ces deux phases cristallines ($\alpha$,$\beta$) montrent chacune une transition d'états de spin inductibles thermiquement entre un état bas spin à une première température basse ($T_{\alpha 2}$, $T_{\beta 2}$) et un état haut spin à une seconde température haute ($T_{\alpha 1}$, $T_{\beta 1}$). Ladite transition de spin relative à chaque phase est assortie d'un changement abrupt de couleur entre une première et une seconde couleur du composé, qui sont les mêmes d'une phase à l'autre. Ladite transition de spin de chaque phase s'effectue par ailleurs selon des cycles d'hystérésis en température différant d'une phase à l'autre. Le cycle d'hystérésis ($T_{\alpha 1}$, $T_{\alpha 2}$) associé à la première phase ($\alpha$) s'effectue au-dessus d'une seconde température de référence ($T_R$), et le cycle d'hystérésis ($T_{\beta 1}$, $T_{\beta 2}$) associé à la seconde phase ($\beta$) s'effectue au-dessous de cette seconde température de référence ($T_R$). La première température de référence (To) est supérieure à la seconde température de référence ($T_R$) et également à la plus haute ($T_{\alpha 1}$) des températures de transition de spin.

Ces propriétés nouvelles et inattendues permettent de mieux appliquer ce composé de départ à la réalisation de milieux actifs pour dispositifs d'affichage, de stockage et de traitement d'information.

L'invention est décrite en détail ci-après, en référence avec les figures schématiques annexées, dont :

- la FIG.1 représente l'enthalpie H correspondant à la transition de spin d'une quantité de composé, par exemple 1 mole en fonction de coordonnées moléculaires arbitraires, par exemple la distance D métal-ligand ;
- la FIG.2 représente les cycles d'hystérésis correspondant à chacun des états $\alpha$ et $\beta$, de composés selon l'invention, où la fraction molaire X du matériau ayant transité à la température T est porté en ordonnée et où la température T en degrés Kelvin est portée en abscisse ;
- les FIG.3 qui illustrent les différentes étapes du procédé d'inscription, mémorisation ou effaçement, au moyen des composés de l'invention.

## I- Formulation chimique des composés de départ sélectionnés selon l'invention

Selon l'invention, on décrit ci-après une sous-famille de composés sélectionnés parmi la famille générale de composés déjà connus de la demande de brevet EP 0 543 465. On emploiera indifféremment les termes "composés à transition de spin", ou "composés de départ à transition de spin" pour désigner les produits sélectionnés selon l'invention dans cette formule générale.

Comme il a été dit précédemment, les composés de la famille générale connue possèdent des propriétés de transition de spin, avec un phénomène d'hystérésis entre l'état bas spin LS et haut spin HS. La température critique des composés connus est située dans la gamme des températures ambiantes, environ 20 ° C, mais leur amplitude d'hystérésis est faible, typiquement une dizaine de degrés.

Au moyen de la sélection décrite ci-après, l'amplitude de l'hystérésis montrée par les composés entre leur état bas spin LS et haut spin HS est élargie.

Il se trouve en fait, que les composés sélectionnés selon l'invention parmi la famille générale, montrent des propriétés nouvelles tout à fait inattendues.

Pour montrer ces propriétés, néanmoins, ces composés sélectionnés doivent être préparés selon un mode de réalisation approprié, faute de quoi leurs propriétés intéressantes ne sont pas obtenues.

Les composés sélectionnés ont une molécule formée d'un complexe du fer $Fe_{II}$, dans lequel ce métal $Fe_{II}$ est associé à un ligand 1-2-4 triazole de formule développée :

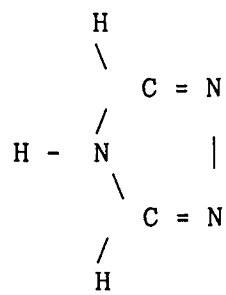

en abrégé H - Trz

Cette molécule comprend en outre un anion choisi parmi :

$BF_4^-$, $ClO_4^-$, $Br^-$, $Cl^-$, $Co_3^{2-}$ .

De ce fait, ces composés ont pour formule, selon l'anion choisi :

a) $Fe_{II}(H\text{-}Trz)_3\ (BF_4^-)_2$

b) $Fe_{II}(H\text{-}Trz)_3\ (ClO_4^-)_2$

c) $Fe_{II}(H\text{-}Trz)_3\ (Br^-)_2$

d) $Fe_{II}(H\text{-}Trz)_3\ (Cl^-)_2$

e) $Fe_{II}(H\text{-}Trz)_3\ (CO_3^{2-})$

Dans ces composés, une molécule peut admettre la présence d'une molécule d'eau $H_2O$, de sorte que leur formulation chimique devient :

a') $Fe_{II}(H\text{-}Trz)_3\ (BF_4^-)_2,\ H_2O$

b') $Fe_{II}(H\text{-}Trz)_3\ (ClO_4^-)_2,\ H_2O$

c') $Fe_{II}(H\text{-}Trz)_3\ (Br^-)_2,\ H_2O$

d') $Fe_{II}(H\text{-}Trz)_3\ (Cl^-)_2,\ H_2O$

e') $Fe_{II}(H\text{-}Trz)_3\ (CO_3^{2-}),\ H_2O$

La présence de cette molécule d'eau par molécule du composé n'est pas indispensable. Lorsque cette molécule d'eau est présente, elle se place dans le réseau, mais elle n'est pas liée de façon covalente aux éléments de formules chimiques a'), b'), c'), d'), e'). Cette molécule d'eau est uniquement liée par liaison hydrogène au ligand H-Trz, le 1-2-4 triazole. Quand cette molécule d'eau est présente, elle agit sur la force

de liaison métal-ligand.

Pour assurer la présence de cette molécule d'eau dans le réseau, une méthode de préparation appropriée doit également être employée.

II - **Procédé de réalisation des composés de formulation chimique précédente.**

A titre d'exemple, pour réaliser le composé dont la formule chimique a été donnée plus haut en :

a) $Fe_{II}$ (H-Trz)$_3$ ($BF_4^-$)$^2$,

on effectue un mélange d'un nombre de :

* n moles de $Fe(BF_4)_2$, $6H_2O$, sel qui est utilisé comme précurseur du noyau de fer $Fe_{II}$, dans une solution de méthanol $CH_3$-OH pur, à la concentration de 10n moles par litre ;
* et 3n moles de 1-2-4 triazole dans une solution de méthanol pur $CH_3$-OH, à la concentration de 30n moles par litre, à température ambiante, de l'ordre de 20 à 25 ° C.

Dans ce procédé de réalisation, n est un nombre supérieur à zéro.

Ce mélange est ensuite concentré sous vide, par exemple à une pression d'environ 30 mm de mercure, c est-à-dire $4.10^3$ Pa (on rappelle que 760 mm.Hg = $10^5$ Pa), et en le portant simultanément à une température comprise entre 60 et 80 ° C, par exemple 70 ° C environ.

Un composé de formule :

a) $Fe_{II}$(H-Trz)$_3$ ($BF_4^-$)$_2$

précipite très rapidement.

Dès que le précipité est obtenu, il est important d'éliminer le solvant méthanol par exemple par filtrage, dans les plus brefs délais, pour obtenir le composé pur à au moins 99 % en masse.

Le compose de formule $Fe_{II}$(H-Trz)$_3$ ($BF_4^-$)$_2$ ainsi obtenu est conservé tel quel sans autre lavage ou traitement.

**Pour obtenir la présence d'une molécule d'eau** dans le réseau, ce qui conduit à un composé de formule :

a') Fe(H-Trz)$_3$ ($BF_4^-$)$_2$, $H_2O$

le précurseur du fer, Fe ($BF_4^-$)$_2$, $6H_2O$ peut être utilisé en excès. Au lieu d'un nombre n moles de $Fe(BF_4)$-$_2$, $6H_2O$, pour 3n moles de 1-2-4 triazole, on utilise par exemple 2n ou 3n moles de $Fe(BF_4)_2$, $6H_2O$.

Pour éviter un excès de fer apporté par l'utilisation du précurseur du fer en excès, ce qui peut conduire à une dégradation des propriétés optiques et magnétiques en cas d'oxydation, on peut remplacer l'utilisation d'un excès de précurseur du fer par un ajout de sels hygroscopiques, tels que :

$Mg(ClO_4)_2$, K $CLO_4$, $NaClO_4$, en proportion de 25 à 100 % en masse.

L'homme du métier doit prendre garde, dans ce procédé de réalisation, **à éliminer complètement et rapidement le solvant** méthanol **dès l'obtention du précipité**. En effet, si la molécule Fe(H-Trz)$_3$ -($BF_4^-$)$_2$, reste en contact avec une quantité, même faible, telle que quelques ml de solvant méthanol, alors cette molécule se "déprotone" pour donner un autre composé de formule :

Fe($Trz^-$)(H-Trz) ($BF_4^-$)

où le métal $Fe_{II}$ est associé à **deux ligands** ($Trz^-$) **et** (H-Trz), au lieu **du seul** ligand (H-Trz).On rappelle que $Trz^-$ est le 1-2-4 **triazolate**.

Donc, le mode de préparation préconisé selon l'invention permet d'obtenir le composé PUR :

Fe(HTrz)$_3$ ($BF_4^-$)$_2$

où le métal $Fe_{II}$ est associé **au seul ligand** (HTrz) 1-2-4 **triazole**. Si l'homme du métier ne réalise pas le composé par un procédé approprié, **un mélange de** :

Fe($Trz^-$)(H-Trz)$_2$ ($BF_4^-$) [composé à deux ligands ($Trz^-$), (H-Trz)]
\+ Fe(H-Trz)$_3$ ($BF_4^-$)$_2$, [composé selon l'invention]

est toujours obtenu, et dans ce mélange, le composé à deux ligands incluant le triazolate et ayant pour formule :

$Fe(Trz^{-})(H\text{-}Trz)_2\ (BF_4^{-})$,

**est toujours majoritaire**.

Si l'homme du métier obtient le mélange cité, dans ce cas le composé $Fe(Trz^{-})(H\text{-}Trz)_2\ (BF_4^{-})$ majoritaire masque les propriétés du composé $Fe(H\text{-}Trz)_3\ (BF_4^{-})_2$, qui est alors une "impureté".

Or, c'est justement le composé $Fe(H\text{-}Trz)_3\ (BF_4^{-})_2$ qui présente des propriétés étonnantes décrites selon la présente invention. Il est donc important d'obtenir ce produit aussi pur que possible, au moins pur à 99 % en masse du composé.

Dans le procédé de réalisation qui vient d'être décrit, le composé chimique sélectionné selon l'invention est recueilli sous forme de poudre, ou d'un produit friable transformable en poudre.

Il est apparu à l'usage un problème technique supplémentaire qui consiste dans le fait que le produit, dans sa forme blanche, peut jaunir à la longue. Cela est dû au fait qu'il peut exister un excès de fer tel que la présence de $Fe\ (BF_4)_2$ dans le produit utile. En effet, le fer $Fe^{2+}$ non ligandé a tendance à s'oxyder en présence d'eau en $Fe^{3+}$.

Le jaunissement du composé peut être nuisible à l'obtention d'un bon contraste lorsque ce composé est utilisé pour réaliser un dispositif d'affichage, et l'oxydation peut conduire par ailleurs à une dégradation des propriétés magnétiques.

La couleur blanche doit donc être stabilisée dans le produit final. Ce résultat est obtenu en ajoutant **à la poudre ou au produit friable**, une quantité inférieure à 5 % en masse d'un réducteur, tel que par exemple l'acide ascorbique.

Par ce procédé, on garde toutes les propriétés du composé, et en outre, on n'est pas pénalisé par l'excès de fer. Donc le produit conserve indéfiniment un blanc parfaitement pur, même en présence d'eau, dans certaines conditions de températures qui seront décrites plus loin.

## III - Remarques

a) Comme on l'a dit précédemment, il n'est pas obligatoire que le réseau de la molécule du composé selon l'invention comprenne de l'eau. Si ce réseau contient de l'eau, 1 molécule d'eau pour 1 molécule du composé est suffisante.

b) Dans le procédé de réalisation, si au lieu du composé ayant pour anion $(BF_4^{-})$, on désire obtenir un composé ayant un des autres anions cités $ClO_4^{-}$, $CO_3^{-2}$, $Br^{-}$, $Cl^{-}$, on utilise comme précurseur du noyau de fer, le sel correspondant, soit respectivement :

$Fe\ (ClO_4)_2,\ 6\ H_2O$
$Fe\ (CO_3),\ 6\ H_2O$
$Fe\ (Br)_2,\ 6\ H_2O$
$Fe\ (Cl)_2,\ 6\ H_2O$

et on poursuit le procédé de la même manière que si le sel $Fe(BF_4)_2,\ 6\ H_2O$ était utilisé.

c) D'autres solvants organiques de type alcool peuvent être utilisés dans la préparation des composés à la place du méthanol.

## IV - Propriétés générales des composés à transition de spin de la sous-famille sélectionnée selon l'invention

En référence avec la FIG.1, les composés de la sous-famille décrits plus haut présentent des transitions de spin induites THERMIQUEMENT.

Ces transitions de spin sont accompagnées de modifications électroniques et structurelles des molécules. Ces modifications provoquent un changement abrupt du spectre d'absorption des molécules et donc de la couleur des composés du fait que les transitions entre les niveaux électroniques sont devenues différentes.

Ainsi, dans l'état bas spin (LS) les composés sont pourpre foncé ; alors que dans l'état haut spin (HS) les composés sont blancs comme la craie. Le contraste entre les couleurs de ces composés dans ces deux états est très grand.

Chacun des états haut spin ou bas spin est stable à une température voisine d'une température dite critique. Les deux états haut spin et bas spin sont stables à cette température critique de façon concomitante.

Ces matériaux présentent en effet, lors des transitions de spin, un effet retard, dû à la coopérativité intermoléculaire. Il en résulte un effet d'hystérésis.

La FIG.1 illustre le fait que ces composés présentent deux puits de potentiel, l'un correspondant à la courbe A, relatif à l'état bas spin, et l'autre correspondant à la courbe B, relatif l'état haut spin. Ces puits de potentiel A et B sont séparés par une barrière de potentiel. Le bas Ao du puits A(LS) correspond à un premier niveau d'énergie $H_{LS}$ et à une première distance métal-ligand $D_{LS}$, et le bas Bo du puits B (HS) correspond à un second niveau d'énergie $H_{HS}$ et à une seconde distance métal-ligand $D_{HS}$.

La différence d'énergie entre les bas Ao et Bo des deux puits de potentiel est notée $\Delta H = H_{HS} - H_{LS}$.

Par application d'une augmentation de température à l'un des composés sélectionnés, qui au départ est placé dans l'état bas spin (LS) où les électrons sont piégés dans le premier puits de potentiel A, des états haut spin excités sont induits. Mais ces états excités ne sont pas stables et les électrons retombent, via des transitions permises, en suivant une voie de relaxation principale qui est celle du second puits de potentiel B, correspondant quant à lui à un état haut spin parfaitement stable.

Les électrons restent alors piégés dans le second puits de potentiel B et ne retournent pas spontanément dans le premier puits de potentiel A correspondant à l'état bas spin. Pour retourner dans l'état bas spin, les composés doivent être refroidis.

La FIG.2 montre sur la courbe $\alpha$, un cycle d'hystérésis du composé de formule chimique :

a) $Fe(H\text{-}Trz)_3\ (BF_4^-)_2$ tel qu'obtenu directement par le procédé décrit plus haut. Ce composé est pris ci-après comme exemple. La fraction molaire X de matériau ayant transité à une température T (en degrés Kelvin) est portée en ordonnée et la température T et portée en abscisse.

Sur la courbe $\alpha$ de la FIG.2, on montre que ce composé a un cycle d'hystérésis compris entre :

$T_{\alpha 1}$ = 345 K pour la température de transition haut spin,
$T_{\alpha 2}$ = 323 K pour la température de transition bas spin.

Pour des températures inférieures à la température $T_{\alpha 2}$, le composé prend l' état bas spin (LS), et pour des températures supérieures à la température $T_{\alpha 1}$, le composé prend l'état haut spin (HS).

Pour une température $T\alpha c \simeq 334$ K qui est la température critique moyenne, les deux états haut spin et bas spin induits antérieurement par une variation thermique apropriée, restent stables indéfiniment.

Ces propriétés étaient déjà prévisibles grâce à l'enseignement de la demande de brevet EP 0 543 465.

Mais le composé sélectionné a) montre, dans les conditions décrites ci-après, des effets étonnants.

Un premier effet étonnant est que, si le composé de formule chimique a), est porté à une température T supérieure ou égale à une température notée première température de référence

$$To = 440\ K$$

alors, il change de phase cristalline. La nouvelle phase cristalline obtenue par chauffage à une température supérieure ou égale à To = 440 K est appelée ci-après phase cristalline $\beta$. La phase cristalline du composé obtenu directement par le procédé décrit plus haut est appelée phase cristalline $\alpha$, et ses propriétés sont celles décrites précédemment.

Un second effet étonnant est que le composé a) dans sa nouvelle phase cristalline $\beta$ présente également une transition de spin avec effet retard, mais à des températures différentes de ce qui a été décrit pour la phase cristalline $\alpha$. Cette transition de spin conduit au cycle d'hystérésis représenté par la courbe $\beta$ sur la FIG.2. Dans sa phase cristalline $\beta$, ce composé a un cycle d'hystérésis compris entre :

$T_{\beta 1}$ = 282 K pour la température de transition haut spin,
$T_{\beta 2}$ = 276 K pour la température de transition bas spin.

Dans la phase $\beta$ aussi bien que dans la phase $\alpha$, dans l'état bas spin, le composé est pourpre, alors que dans l'état haut spin, il est blanc pur.

Donc, lorsque l'on part d'un composé à la température ambiante $T_R$ = 290 K notée seconde température de référence, le composé se trouve dans l'état bas spin de la phase $\alpha$ et est pourpre, puisque $T_R < T_{\alpha 2}$.

Puis, lorsque l'on chauffe le composé à une température T telle que $T_{\alpha1} < T < To$, c'est-à-dire 345 K < T < 440 K, il devient blanc, car il est dans l'état haut spin de la phase $\alpha$.

Ensuite, lorqu'on ramène le composé à la température ambiante $T_R$ = 290°, il redevient pourpre car il retourne à l'état bas spin de la phase $\alpha$.

Lorsque maintenant on chauffe le composé à une température supérieure à ladite première température de référence To c'est-à-dire supérieure ou égale à 440 K, ce composé devient blanc car il est dans l'état haut spin de la phase $\beta$.

Mais, une fois qu'il a été chauffé au-dessus de To, lorsqu'on le ramène à la température ambiante $T_R$ = 290 K, le composé reste blanc : il reste dans l'état haut spin de la phase $\beta$, car

$$T_R > T_{\beta1}$$

Pour le rendre pourpre à nouveau, il faut le refroidir jusqu'à la température de transition bas spin $T_{\beta2}$ de la phase $\beta$, c'est-à-dire le refroidir jusqu'à 276 K, ou des températures inférieures.

**Tous les composés sélectionnés** de formule a) à e) et de formule a') à e') montrent les mêmes propriétés et les mêmes effets étonnants que ce qui vient d'être décrit relativement au composé de formule a).

V - **Dispositif d'inscription, mémorisation et affichage de données.**

Un dispositif d'inscription, mémorisation et affichage de données incluant au moins un des composés sélectionnés selon l'invention est proposé ci-après à titre d'exemple. Ce dispositif comprend :

**A) un milieu actif et un support**

La réalisation d'un dispositif d'inscription, mémorisation et affichage comprend, d'abord, la réalisation d'un milieu actif incluant un ou plusieurs composés chimiques à transition de spin sélectionnés et décrits précédemment, ce milieu étant lui-même associé à un support.

Dans un premier exemple, le milieu actif peut être favorablement formé d'un film mince du composé chimique déposé directement sur le support. A cet effet, le film peut être réalisé par évaporation d'un solvant contenant la poudre du composé chimique sélectionné.

Dans un second exemple, le composé chimique en poudre peut être enrobé dans un matériau transparent. Ce matériau peut être une résine polymérisable transparente déposée sur le support.

Le support peut être une plaque de toute forme périphérique, carrée, rectangulaire, polygonale, ou circulaire, ovale, etc, et de toutes dimensions. Notamment, de très grandes dimensions aussi bien que de très petites dimensions peuvent être envisagées. Le support pourra être choisi rigide ou souple. De plus, un grand nombre de matériaux favorablement non cassants et de faibles coûts se prête très bien au rôle de support pour les composés à transition de spin, par exemple un matériau synthétique.

On peut envisager que le dispositif travaille en réflexion, ou bien travaille en transmission. Pour le travail en transmission, le support peut être en un matériau transparent.

Dans le dispositif d'inscription, mémorisation et affichage, le milieu actif est délimité en zones d'affichage et en zones de fond.

B) **Un système d'adressage thermique**

Le dispositif doit en outre comprendre des moyens pour modifier localement ou globalement la température du milieu actif.

Ces moyens consistent en un système d'adressage thermique pour modifier la température des zones d'affichage, et celles des zones de fond.

B1) Ce système d'adressage thermique comprend d'une part des moyens de chauffage tels que :

- **un crayon chauffant**,
  Un crayon chauffant peut être réalisé par exemple au moyen d'un faisceau laser dans le domaine de l'infrarouge ou bien un laser de longueur d'onde 520 mm, ou un crayon à chauffage résistif,
- **une matrice de plots chauffants** résistifs, adressés selon des lignes et des colonnes en x, y.

Cette matrice de plots chauffants peut comprendre deux réseaux d'électrodes croisées entre elles. Dans une réalisation particulière, le milieu actif peut être disposé entre les deux réseaux d'électrodes, avec un système de dissipation de la chaleur. Favorablement, les électrodes peuvent être transparentes et réalisées par exemple en InSnO (en anglais Indium Tin Oxide). Dans cette réalisation particulière, le

dispositif d'inscription, mémorisation et affichage peut travailler aussi bien en transmission, qu'en réflexion.

Si, dans l'application envisagée, il n'est pas indispensable que les électrodes soient transparentes, elles peuvent être en tous métaux classiquement utilisés à cet usage.

L'avantage du dispositif incluant une matrice d'électrodes x,y, est qu'il peut recevoir et afficher des messages, des données ou des informations, codés en x, y.

Selon l'invention, on peut par exemple appliquer le système ainsi constitué à la réalisation d'un dispositif d'émission-réception avec affichage du message transmis.

B2) Ce système d'adressage thermique comprend d'autre part des moyens de refroidissement, tels que :

- **des moyens de refroidissement global** du support,
- **des moyens de refroidissement partiel** tels que des éléments Peltier pour refroidir sélectivement les zones d'affichage, ou les zones de fond.

## VI - Procédé pour mettre en oeuvre ces dispositifs

En référence avec la FIG.3 on a représenté un dispositif d'écriture-effaçage et affichage d'informations réalisé en utilisant le composé a) décrit plus haut pour former un milieu actif.

Avec ce dispositif, on dispose comme on l'a dit plus haut de moyens pour chauffer ou refroidir localement un écran formé d'un support couvert du milieu actif incluant le composé a), aux diverses températures $T_{\alpha1}$, $T_{\alpha2}$, $T_R$, $T_{\beta1}$, $T_{\beta2}$, To, dans au moins une zone d'affichage et dans une zone de fond. Dans l'exemple illustré par la FIG.3, l'écran montre une seule zone d'affichage : dans cet exemple la zone d'affichage est un motif géométrique, la lettre de l'alphabet "Z".

A l'aide des moyens de chauffage et refroidissement, on fait subir localement au milieu actif de cet écran, dans cette zone d'affichage, à l'emplacement de ce motif, les perturbations thermiques successives suivantes :

A) On part de la température ambiante $T_R$ = 290K :
l'écran est uniformément pourpre (FIG.3A) ; on est dans l'état bas spin de la phase $\alpha$ pour tout l'écran, c'est-à-dire pour la zone d'affichage et pour le fond.

B) On porte la zone d'affichage du motif à une température T

$$T_{\alpha1} < T < To$$

c'est-à-dire 345 K < T < 440 K : le motif apparait en blanc sur fond pourpre (FIG.3B) ; la zone du motif est dans l'état haut spin de la phase $\alpha$ ; le fond est resté dans l'état bas spin de la phase $\alpha$.

C) On ramène la zone du motif à la température ambiante $T_R$ = 290 K, l'écran redevient uniformément pourpre (FIG.3C) ; on est à l'état bas spin de la phase $\alpha$ pour tout l'écran.

D) On porte la zone du motif à la température élevée T supérieure ou égale à To = 440 K ; la zone du motif devient blanche, car elle est dans l'état haut spin de la phase $\beta$ ; le reste de l'écran est pourpre, étant resté à l'état bas spin de la phase $\alpha$ (FIG.3D).

E) On ramène la zone du motif à la température ambiante $T_R$ = 290 K : la zone du motif reste blanche car elle est toujours dans l'état haut spin de la phase $\beta$ ; le fond de l'écran reste pourpre (FIG.3E).

F) On diminue la température de la zone du motif jusqu'à une température inférieure ou égale à $T_{\beta2}$ = 276 K : la zone du motif redevient pourpre (FIG.3F).

Mais c'est là que réside un troisième effet étonnant : le motif n'est pas effacé comme on pourrait le croire du fait que l'écran est redevenu entièrement pourpre : l'information relative à ce motif est seulement CACHEE. En effet, alors que le fond de l'écran est resté à l'état bas spin de la phase $\alpha$, la zone du motif est à l'état bas spin de la phase $\beta$.

G) On réchauffe la zone du motif jusqu'à la température ambiante $T_R$ = 290 K, et il en résulte que la zone du motif REAPPARAIT en blanc sur fond pourpre car cette zone est maintenant dans l'état haut spin de la phase $\beta$.

Grâce à ces nouvelles propriétés étonnantes des composés sélectionnés selon l'invention, l'information a donc été MEMORISEE dans les étapes D et E, CACHEE dans l'étape F et REAFFICHEE dans l'étape G (FIG.3G).

H) L'information qui est réapparue dans l'étape G), où la zone du motif est dans l'état haut spin de la phase $\beta$, s'efface spontanément au bout d'un certain temps par retour du composé dans la phase $\alpha$. Ce temps est variable d'un produit à l'autre sur la liste des produits sélectionnés.

Ce temps peut être de quelques heures. Il peut même être de plusieurs jours. L'effacement se fait alors par retour SPONTANE de la phase $\beta$ vers la phase $\alpha$.

L'EFFACEMENT peut en outre être induit SUR COMMANDE par des voies AUTRES que thermiques.

Le composé est alors redevenu vierge d'informations et il est réutilisable pour une nouvelle étape d'inscription.

En utilisant les étapes A, B et C, le composé dans sa phase $\alpha$ peut être utilisé comme il était déjà connu pour afficher des informations en imposant l'instant où l'on écrit l'information et l'instant où on l'efface totalement. L'information peut être mémorisée dans un, ou provenir d'un, dispositif annexe, autre que le milieu actif de l'écran. Le milieu actif réalisé avec le composé dans sa phase $\alpha$ a alors seulement une fonction d'affichage.

Puis en utilisant les étapes D à G, le composé dans la phase $\beta$ permet d'afficher une information, de la mémoriser dans le milieu actif de l'écran puis de la cacher et de la réafficher à volonté sur l'écran. Le milieu actif de l'écran a alors en plus de la fonction d'affichage, une fonction de mémoire.

Les propriétés qui ont été décrites ci-dessus pour le composé de formule chimique a), sont également celles des autres composés b), c), d) et e), et celles des composés a') à e').

## VII - Applications et avantages des dispositifs d'inscription, mémorisation et affichage

Un dispositif d'affichage réalisé au moyen d'un milieu actif selon l'invention peut avantageusement être utilisé pour réaliser un écran d'affichage à très bas coût pour une carte à mémoire. Comme on l'a dit précédemment, le milieu actif peut être associé à un support synthétique, formant un système particulièrement bien adapté à coopérer avec un autre support synthétique tel que celui de la carte. De plus le milieu actif associée à son propre support peut être extrêmement mince. L'utilisation de ce système milieu actif/support, pour réaliser un écran pouvant afficher les données stockées dans une carte à mémoire, est donc particulièrement favorable.

Un tel dispositif d'affichage peut aussi être utilisé dans de nombreux autres appareils où la fragilité d'un écran à cristaux liquides est défavorable, notamment pour l'affichage de données concernant le fonctionnement d'appareils électroménagers. Le dispositif d'affichage peut encore être utilisé pour les calculatrices, les appareils audio, vidéo, de jeux, etc, et notamment les écrans de moniteurs, les écrans d'affichage public, urbain ou d'aéroport, etc. Un tel dispositif d'affichage peut remplacer un grand nombre des applications des dispositifs d'affichage à cristaux liquides mais n'est pas limité à ces applications du fait qu'il peut être réalisé sur des très grands supports.

Une application du dispositif d'affichage peut être par exemple du type "ardoise magique". Cette ardoise est un dispositif qui utilise un crayon chauffant en combinaison avec un milieu actif incluant les composés sélectionnés. Une telle ardoise magique pourrait être utilisée pour visualiser les données introduites dans un support de stockage informatique au moyen d'une tablette tactile classique.

## Revendications

**1.** Composé chimique de départ à transition de spin, sous forme de poudre, incluant un réseau avec une molécule formée d'un complexe où le fer ($Fe_{II}$) est associé à un ligand 1-2-4 triazole (H-Trz), cette molécule comprenant en outre un anion $(A)_2$ choisi parmi $BF_4^-$, $ClO_4^-$, $Br^-$, $CO_3^{2-}$, et cette molécule ayant pour formule selon l'anion :

a) $Fe_{II}(H\text{-}Trz)_3\ (BF_4^-)_2$

b) $Fe_{II}(H\text{-}Trz)_3\ (ClO_4^-)_2$

c) $Fe_{II}(H\text{-}Trz)_3\ (Br^-)_2$

d) $Fe_{II}(H\text{-}Trz)_3\ (Cl^-)_2$

e) $Fe_{II}(H\text{-}Trz)_3\ (CO_3^{2-})$

**2.** Composé chimique de départ à transistor de spin, sous forme de poudre, incluant un réseau avec une molécule formée d'un complexe où le fer ($Fe_{II}$) est associé à un ligand 1-2-4 triazole (H-Trz), cette molécule comprenant en outre un anion $(A)_2$ choisi parmi $BF_4^-$, $ClO_4^-$, $Br^-$, $CO_3^{2-}$, et cette molécule ayant pour formule selon l'anion :

a') $Fe_{II}(H\text{-}Trz)_3\ (BF_4^-)_2$, $H_2O$

b') $Fe_{II}(H\text{-}Trz)_3\ (ClO_4^-)_2$, $H_2O$

c') $Fe_{II}(H\text{-}Trz)_3\ (Br^-)_2$, $H_2O$

d') $Fe_{II}(H\text{-}Trz)_3\ (Cl^-)_2$, $H_2O$

e') $Fe_{II}(H\text{-}Trz)_3\ (CO_3^{2-})$, $H_2O$

où une molécule d'eau par molécule du complexe de fer est présente dans le réseau, uniquement liée par liaison hydrogène au ligand 1-2-4 triazole (H-Trz).

**3.** Composé selon la revendication 2, comprenant un sel hygroscopique dans les proportions de 25 à 100 % en masse dudit composé, pour obtenir la présence de ladite molécule d'eau dans le réseau.

**4.** Composé selon la revendication 3, dans lequel le sel hygroscopique est le boro fluorure de fer [Fe $(BF_4)_2$], le perchlorate de magnésium [Mg $(ClO_4)_2$], le perchlorate de potassium [K $ClO_4$], le perchlorate de sodium [Na $ClO_4$]. , ou un mélange de ceux-ci.

**5.** Composé selon l'une des revendications 1 ou 2, comprenant un agent réducteur en quantité inférieure à 5 % en masse dudit composé.

**6.** Composé selon l'une des revendications 3 ou 4 comprenant un agent réducteur en quantité inférieure à 5 % en masse dudit composé.

**7.** Composé selon l'une des revendications 5 ou 6, dans lequel l'agent réducteur est l'acide ascorbique.

**8.** Procédé de réalisation d'un composé de départ $Fe_{II}(HTrz)_3\ A_2$ conforme à celui de la revendication 1, comprenant (n étant un nombre supérieur à zéro) :

- la formation d'un mélange, à température ambiante ;
  * d'un nombre n de moles d'un précurseur $Fe_{II}A_2$, $6H_2O$ du noyau de fer $Fe_{II}$, où A est un anion $BF_4^-$, $ClO_4^-$, $Br^-$, $CO_2^{2-}$, $Br^-$, ce précurseur ayant pour formule selon ledit anion :

    a'') $Fe(BF_4)_2$, $6H_2O$

    b'') $Fe(ClO_4)_2$, $6H_2O$

    c'') $Fe(CO_3)$, $6H_2O$

    d'') $Fe(Br)_2$, $6H_2O$

    e'') $Fe(Cl)_2$, $6H_2O$

    et ce précurseur étant en solution dans un solvant organique du type alcool, à une concentration de 10n moles par litres,
  * avec un nombre 3n de moles d'un ligand 1-2-4 triazole (H-Trz) en solution dans le même solvant organique de type alcool à une concentration de 30n modes par litre ;
- la concentration dudit mélange, sous vide, à une température comprise entre 60 à 80 °C jusqu'à précipitation du composé recherché $Fe_{II}(HTrz)_3\ A_2$ ;
- la séparation dudit composé $Fe_{II}(HTrz)_3A_2$ du solvant organique de type alcool, pour obtenir une poudre dudit composé pure à au moins 99 % en masse.

**9.** Procédé de réalisation d'un composé de départ $Fe_{II}(HTrz)_3\ A_2$, $H_2O$ conforme à celui de la revendication 2, comprenant (n étant un nombre supérieur à zéro) :

- la formation d'un mélange, à température ambiante :

* d'un nombre 2n à 3n modes d'un précurseur $Fe_{II}A_2$, $6H_2O$ du noyau de fer $Fe_{II}$, où A est un anion $BF_4^-$, $ClO_4^-$, $Br^-$, $CO_2^{2-}$, $Br^-$, ou $Cl^-$, ce précurseur ayant pour formule selon ledit anion :

  a") $Fe(BF_4)_2$, $6H_2O$

  b") $Fe(ClO_4)_2$, $6H_2O$

  c") $Fe(CO_3)$, $6H_2O$

  d") $Fe(Br)_2$, $6H_2O$

  e") $Fe(Cl)_2$, $6H_2O$

  et ce précurseur étant en solution dans un solvant organique du type alcool, à une concentration de 10n moles par litres,
* avec un nombre 3n de moles d'un ligand 1-2-4 triazole (H-Trz) en solution dans le même solvant organique de type alcool à une concentration de 30n moles par litre ;

- la concentration dudit mélange, sous vide, à une température comprise entre 60 à 80 °C jusqu'à précipitation du composé recherché $Fe_{II}(HTrz)_3$ $A_2$, $H_2O$ ;
- la séparation dudit composé $Fe_{II}(HTrz)_3A_2$, $H_2O$ du solvant organique de type alcool, pour obtenir une poudre dudit composé pure à au moins 99 % en masse.

**10.** Procédé selon l'une des revendications 8 ou 9, dans lequel le solvant organique du type alcool est le méthanol $CH_3$-OH.

**11.** Dispositif pour l'inscription, la mémorisation et/ou l'affichage d'informations comprenant un milieu actif associé à un support, ce milieu actif incluant un composé de départ en poudre, ou un mélange de composés de départ en poudre conforme(s) à l'une des revendications 1 à 7, ce milieu actif étant délimité en au moins une zone d'affichage et au moins une zone de fond.

**12.** Dispositif selon la revendication 11, comprenant en outre des moyens référencés système d'adressage thermique pour modifier au moins localement sur commande la température desdites zones de fond, ou la température desdites zones d'affichage.

**13.** Dispositif selon d'une des revendications 11 à 12, dans lequel le composé de départ, ou de mélange de composés de départ, est appliqué en une ou plusieurs couches sur un support.

**14.** Dispositif selon d'une des revendication 11 à 13, dans lequel le composé de départ ou le mélange de composés de départ, est appliqué dans un matériau d'enrobage.

**15.** Dispositif selon la revendication 14, dans lequel le matériau d'enrobage est une résine polymérisable.

**16.** Dispositif selon l'une des revendications 12 à 15, dans lequel le système d'adressage thermique comprend des premiers moyens de chauffage et des seconds moyens de refroidissement pour engendrer sélectivement dans les zones d'affichage et dans les zones de fond sur commande :

- une température supérieure ou égale à une température ($T_o$) notée première température de référence ($T_o$) pour faire passer le(s) composé(s) de départ du milieu actif d'une phase cristalline référencée première phase cristalline ($\alpha$) à une phase cristalline référencée seconde phase cristalline ($\beta$) ;
- des températures ($T\alpha1$, $T\alpha2$) appropriées à induire respectivement un état haut spin ou un état bas spin lorsque le(s) composé(s) est(sont) dans la première phase ($\alpha$), par transition de spin induite thermiquement dans cette première phase ($\alpha$), avec changement abrupt de couleur au passage d'un état de spin à l'autre, et avec un phénomène d'hystérésis, ;
- des températures ($T\beta1$, $T\beta2$) appropriées à induire respectivement un état haut spin ou un état bas spin lorsque le(s) composé(s) est (sont) dans la seconde phase ($\beta$) par transition de spin induite thermiquement dans cette seconde phase ($\beta$) avec même changement abrupt de couleur que dors de la transition de spin dans la première phase ($\alpha$), et avec un phénomène d'hystérésis,

- ou une température ($T_R$) notée seconde température de référence ($T\alpha$) située entre la température bas spin ($T_{\alpha 2}$) du phénomène d'hystérésis lié à la première phase ($\alpha$) se produisant dans le plus haut domaine de température, et la température haut spin ($T\beta 1$) du phénomène d'hystérésis lié à la seconde phase ($\beta$) se produisant dans de plus bas domaine de température, pour faire coexister, à ladite seconde température de référence ($T_R$) le (les) composé(s) à l'état bas spin de la première phase ($\alpha$) avec le(s) composé(s) à l'état haut spin de la seconde phase cristalline ($\beta$).

**17.** Dispositif selon la revendication 16, dans lequel :
- la première température de référence ($T_o$) est environ 440 K ;
- la seconde température de référence ($T_R$) est proche de la température ambiante 290 K;
- les températures haut spin et bas spin ($T_{\alpha 1}$, $T_{\alpha 2}$) de la première phase ($\alpha$) sont de l'ordre de 345 et 323 K respectivement ;
- les températures haut spin et bas spin ($T_{\beta 1}$, $T_{\beta 2}$)de la seconde phase ($\beta$) sont de l'ordre de 282 et 276 K respectivement.

**18.** Dispositif selon d'une des revendications 12 à 17, dans lequel le système d'adressage thermique comprend un dispositif d'adressage codé.

**19.** Dispositif selon d'une des revendications 12 à 18, formant un écran de visualisation de données.

**20.** Dispositif selon l'une des revendications 12 à 19, coopérant avec une carte à mémoire.

**21.** Procédé pour inscrire, afficher, mémoriser ou effacer des données dans le milieu actif d'un dispositif selon d'une des revendications 12 à 19, comprenant d'action du système d'adressage thermique pour réaliser des opérations de :

A) initialisation, consistant à placer le milieu actif des zones de fond, et des zones d'affichage sélectionnées du dispositif, à une température ($T_{\alpha 2}$) appopriée à induire l'état bas spin de la première phase cristalline ($\alpha$), le milieu actif étant alors de couleur pourpre,

B) inscription, en appliquant dans des zones d'affichage une température supérieure ou égale à la température haut spin ($T_{\alpha 1}$) de la première phase cristalline ($\alpha$) et inférieure à la première température de référence (To), inscription durant laquelle des zones d'affichage prennent l'état haut spin de couleur blanche de la phase ($\alpha$), et durant laquelle le fond est maintenu à la seconde température de référence ($T_R$), le matériau actif du fond restant de couleur pourpre,

C) affichage consistant à maintenir desdites zones d'affichage sélectionnées à une température supérieure à la température haut spin ($T_{\alpha 1}$) et inférieure à la première température de référence (To), affichage durant lequel les zones d'affichage restent blanches étant à l'état haut spin de la première phase ($\alpha$), et durant lequel de fond est maintenu à la seconde température de référence ($T_R$), de matériau actif du fond restant de couleur pourpre,

D) effacement sans mémorisation en appliquant dans les zones d'affichage une température inférieure à la température bas spin ($T_{\alpha 2}$) de la première phase ($\alpha$), par exemple égale à la seconde température de référence ($T_R$), effacement durant lequel les zones d'affichage retournent à d'état bas spin pourpre de la première phase ($\alpha$), et durant lequel le fond est maintenu à la seconde température de référence ($T_R$), de matériau actif du fond restant de couleur pourpre.

**22.** Procédé selon la revendication 21, comprenant comme alternative aux opérations B, C, D les opérations de :

B') inscription en appliquant dans des zones d'affichage une température supérieure ou égale à la première température de référence (To), inscription durant laquelle les zones d' affichage prennent l'état haut spin blanc de la seconde phase cristalline ($\beta$), et durant laquelle de fond est maintenu à la seconde température de référence ($T_R$), le matériau actif du fond restant de couleur pourpre,

C') affichage en appliquant dans les zones d'affichage une température supérieure à la température haut spin ($T_{\beta 1}$) de la seconde phase ($\beta$), telle que la seconde température de référence ($T_R$), affichage durant lequel des zones d'adressage restent dans l'état haut spin de couleur blanche de la seconde phase ($\beta$), et durant lequel de fond est maintenu à la seconde température de référence ($T_R$), le matériau actif du fond restant de couleur pourpre,

D') effacement avec mémorisation, en appliquant dans les zones d'affichage une température inférieure à la température bas spin ($T_{\beta 2}$) de la seconde phase ($\beta$), effacement durant lequel les zones d'affichage deviennent pourpre dû à l'état bas spin de la seconde phase ($\beta$), sur de fond qui

est pourpre dû à l'état bas spin de la première phase ($\alpha$),
ce procédé comprenant en outre une étape :
E) réaffichage des données mémorisées, en appliquant dans les zones d'affichage une température supérieure à la température haut spin ($T_{\beta 1}$) de la seconde phase ($\beta$), telle que la seconde température de référence ($T_R$), réaffichage durant lequel les zones d'affichage redeviennent blanches dû à d'état haut spin de cette seconde phase ($\beta$), sur de fond qui est resté pourpre.

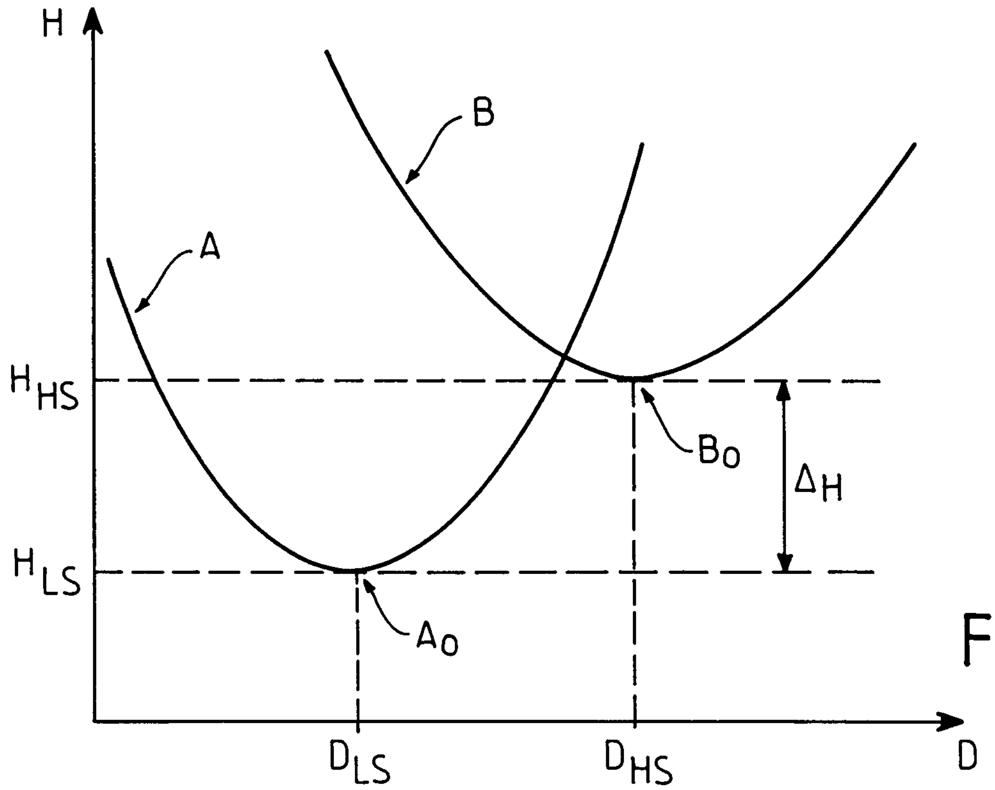
H
B
A
$H_{HS}$
$B_0$
$\Delta_H$
$H_{LS}$
$A_0$
$D_{LS}$
$D_{HS}$
D

FIG.1

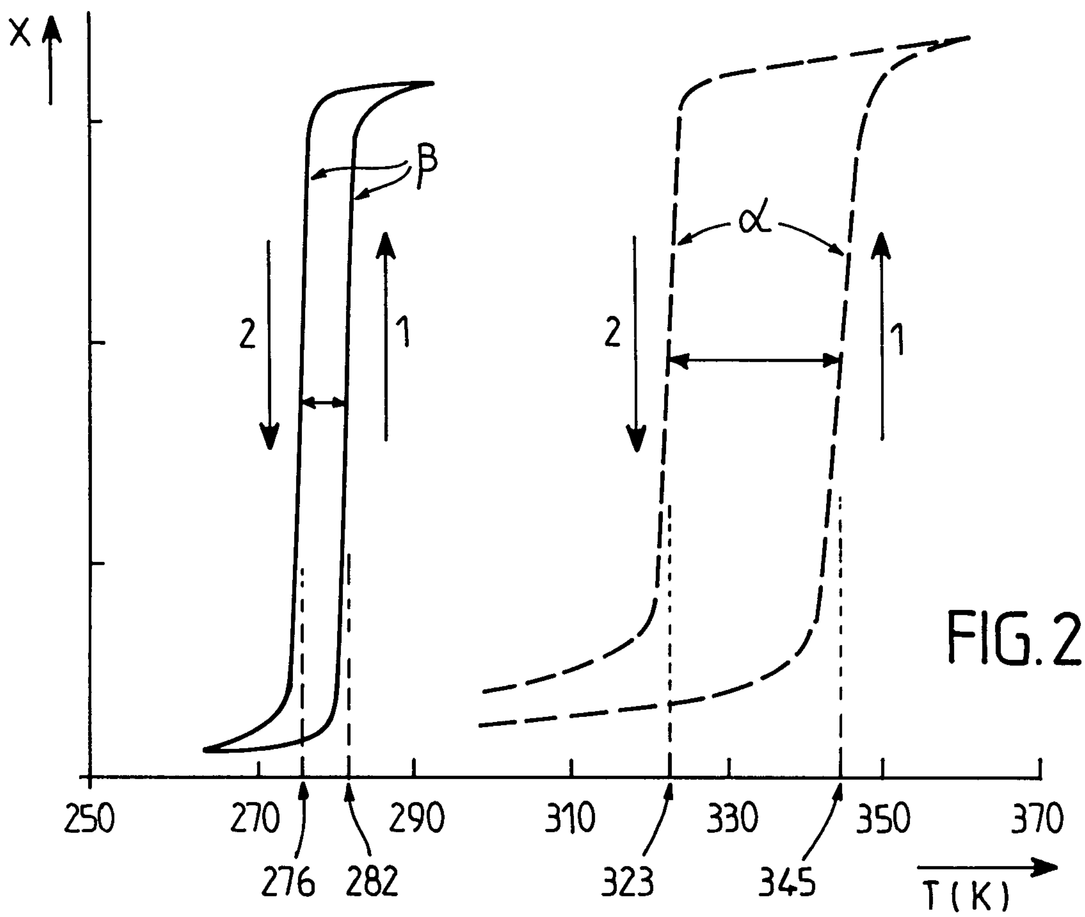
X
β
α
2
1
2
1
250
270
290
310
330
350
370
276
282
323
345
T(K)

FIG.2

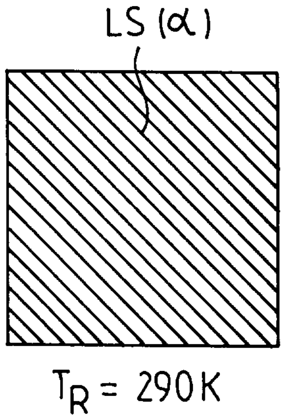


FIG.3A

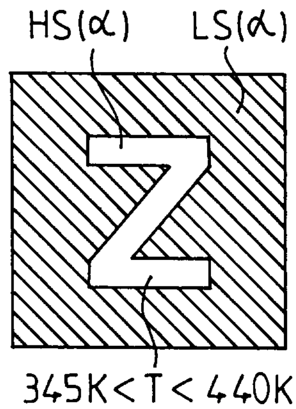


FIG.3B

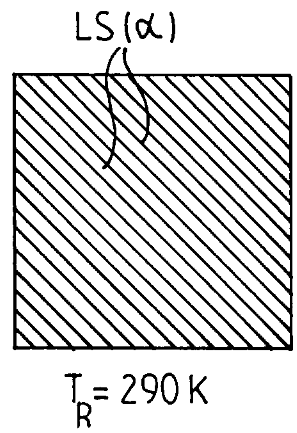


FIG.3C

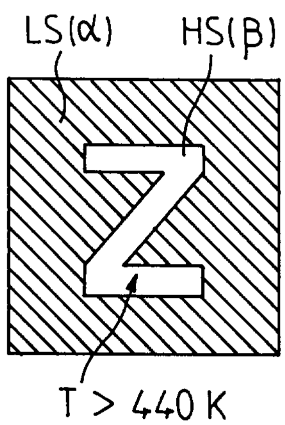


FIG.3D

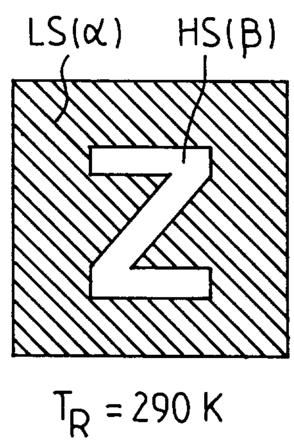


FIG.3E

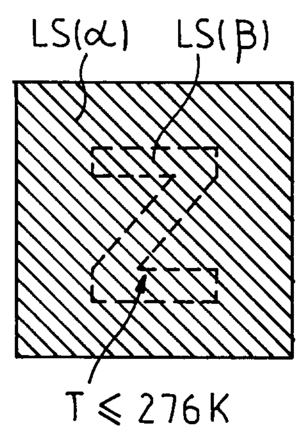


FIG.3F

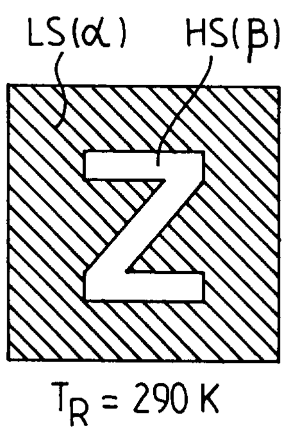


FIG.3G

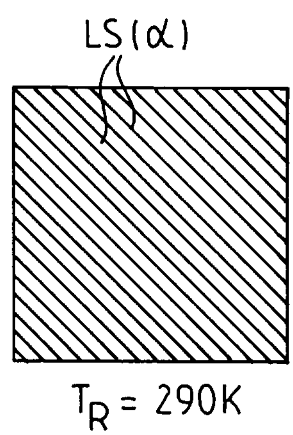


FIG.3H

Office européen des brevets

# RAPPORT DE RECHERCHE EUROPEENNE

Numero de la demande
EP 95 20 0202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | JOURNAL OF THE AMERICAN CHEMICAL SOCIETY, vol.115, no.21, Octobre 1993, WASHINGTON, DC, US pages 9810 - 9811 KRÖBER ET AL 'A SPIN TRANSITION SYSTEM WITH A THERMAL HYSTERESIS AT ROOM TEMPERATURE' * page 9810, colonne de droite, alinéa 2 -alinéa 3 * * page 9811, colonne de gauche, alinéa 2 * | 1,5,7,8, 10 | G11B7/00 G11B7/24 C07F15/02 |
| D,A | EP-A-0 543 465 (LABORATOIRES D'ELECTRONIQUE PHILIPS) * page 7; tableau I * * page 8; tableau II * | 1-22 | |
| X | CHEMICAL ABSTRACTS, vol. 114, no. 4, 28 Janvier 1991, Columbus, Ohio, US; abstract no. 34747m, LAVRENOVA ET AL. 'SPIN TRANSITION IN IRON (II) TRIAZOLE COMPLEXES' page 738 ;colonne R ; * abrégé * & KORD. KHIM, vol.16, no.5, 1990, RUSSIE | 1 | |
| A | ADVANCED MATERIALS, vol.4, no.11, Novembre 1992, WEINHEIM pages 710 - 728, XP000324149 O. KAHN, J. KRÖBER, C. JAY 'SPIN TRANSITION MOLECULAR MATERIALS FOR DISPLAYS AND DATA RECORDING' * page 723 * | 1-22 | |

| DOMAINES TECHNIQUES RECHERCHES (Int.Cl.6) |
|---|
| G11B C07F |

Le présent rapport a été établi pour toutes les revendications

| Lieu de la recherche | Date d'achèvement de la recherche | Examinateur |
|---|---|---|
| LA HAYE | 30 Mai 1995 | Vogt, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)